# EUROPÄISCHE PATENTANMELDUNG

(11) **EP 3 089 105 A1**
(43) Veröffentlichungstag der Anmeldung: **02.11.2016**
(21) Anmeldenummer: 16167216.7
(22) Anmeldetag: 27.04.2016
(51) Int. Cl.: G06T 5/50

(54) **VERFAHREN ZUM GENERIEREN EINES KONTRASTBILDES EINER OBJEKTBESCHAFFENHEIT UND DIESBEZÜGLICHE VORRICHTUNGEN**

(30) Priorität: 30.04.2015 DE 102015208084
(71) Anmelder: Carl Zeiss Microscopy GmbH, 07745 Jena (DE)
(72) Erfinder: STOPPE, Lars, 07743 Jena (DE); HUSEMANN, Christoph, 07749 Jena (DE)
(74) Vertreter: Müller, Silke

(57) **Zusammenfassung**

Die Erfindung betrifft ein Kontrastbildungsverfahren, sowie diesbezügliche Software zum Generieren eines Kontrastbildes, folgende Schritte umfassend:
- Illuminieren (10) eines Objektes mittels einer Illuminationssequenz (11) basierend auf einer oder mehreren an Illuminationsquellen (111);
- Erstellen (20) eines Illuminationsbildes (21) des Objektes für eine jede Illumination (12) der Illuminationssequenz (11);
- Überlagern (30) jeweils zweier bezüglich einer ersten Achse (35) benachbarter Illuminationsbilder (21) zu einem ersten Gesamtachsenbild (31) der ersten Achse (35);
- Überlagern (30) jeweils zweier bezüglich einer zweiten Achse (36) benachbarter Illuminationsbilder (21) zu einem zweiten Gesamtachsenbild (32) der zweiten Achse (36);
- Erstellen (40) eines ersten Farbverlaufsbildes (41) basierend auf dem ersten Gesamtachsenbild (31);
- Erstellen (40) eines zweiten Farbverlaufsbildes (42) basierend auf dem zweiten Gesamtachsenbild (32),
- Transformieren (50) des ersten Farbverlaufbildes (41) und des zweiten Farbverlaufbildes (42) in einen Farbraum (51); und
- Generieren (60) eines Kontrastbildes (61), basierend auf dem transformierten (50) ersten Farbverlaufsbild (41) und dem zweiten Farbverlaufsbild (42) in den Farbraum (51), derart, dass vier Richtungsinformationen (351, 352, 361, 362) eines Höhen- oder Phasenverlaufes einer Beschaffenheit des Objektes farbcodiert darstellbar sind.

## Beschreibung

Die vorliegende Erfindung betrifft ein Verfahren zum Generieren eines Kontrastbildes, insbesondere zum Ablesen von Höhenverlaufs- und/oder Phasenverlaufsinformationen einer Objektbeschaffenheit und diesbezügliche Vorrichtungen.

Sowohl in der klassischen biologischen Mikroskopie als auch in der Materialmikroskopie werden neben der normalen Hellfeld-Bildgebung verschiedene Formen von Kontrastverfahren verwendet, um zusätzliche Informationen über das beobachtete Objekt zu gewinnen. Beispiele hierfür sind Phasenkontrastverfahren (beispielsweise Zernike, Differentialinterferenzkontrast - DIC) oder auch alternative Bildgenerierungsverfahren (beispielsweise Dunkelfeld). Aktuell werden Varianten beschrieben, wie Kontrastbilder aus Einzelbildern berechnet werden können. In den bisherigen Veröffentlichungen werden dabei DIC-Alternativen beschrieben, wobei dies in der Regel zu grauen Bildern führt und wobei die Qualität der berechneten Kontrastbilder stark richtungsabhängig ist. Im Allgemeinen haben alle beschriebenen Kontraste den Nachteil, dass sie eine spezielle Eigenschaft des Objekts hervorheben, dafür jedoch andere Eigenschaften ignorieren beziehungsweise abschwächen. Beispielsweise haben DIC-Verfahren beziehungsweise das digitale Analogon der Bildung der Differenz von Bildern gegenüberliegender Beleuchtungsrichtungen (DPC) den Nachteil, dass sie lediglich richtungsabhängige Grauwertbilder generieren.

Daher wäre es wünschenswert, eine Möglichkeit bereitzustellen, welche ein richtungsabhängiges Farbcodieren einer Objektbeschaffenheit eines Objektes erlaubt, insbesondere von Höhenverlaufs- und/oder Phasenverlaufsinformationen der Objektbeschaffenheit.

Es ist Ziel der Erfindung, eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels Vorrichtungen gemäß der nebengeordneten Ansprüche.

Der Gegenstand des Hauptanspruches betrifft dabei ein Kontrastbildungsverfahren zum Generieren eines Kontrastbildes, vorzugsweise aus mikroskopischen Abbildungen, insbesondere zum Ablesen von Höhen- und/oder Phasenverlaufsinformationen einer Objektbeschaffenheit. Dabei weist das Kontrastbildungsverfahren auf: Illuminieren eines Objektes mittels einer Illuminationssequenz basierend auf einer oder einer Vielzahl (zwei oder mehr) an Illuminationsquellen. Erstellen eines Illuminationsbildes des Objektes für eine jede Illumination der Illuminationssequenz. Überlagern jeweils zweier bezüglich einer ersten Achse benachbarter Illuminationsbilder zu einem ersten Gesamtachsenbild der ersten Achse. Überlagern jeweils zweier bezüglich einer zweiten Achse benachbarter Illuminationsbilder zu einem zweiten Gesamtachsenbild der zweiten Achse. Erstellen eines ersten Farbverlaufsbildes basierend auf dem ersten Gesamtachsenbild. Erstellen eines zweiten Farbverlaufsbildes basierend auf dem zweiten Gesamtachsenbild. Transformieren des ersten Farbverlaufsbildes und des zweiten Farbverlaufsbildes in einen Farbraum. Und generieren eines Kontrastbildes, basierend auf dem transformierten ersten Farbverlaufsbild und dem zweiten Farbverlaufsbild in den Farbraum, derart, dass vier Richtungsinformationen eines Phasen+ oder Höhenverlaufes einer Beschaffenheit des Objektes farbcodiert darstellbar sind.

Die Verfahrensschritte können dabei automatisiert ausgeführt werden.

Eine Höhenverlaufsinformationen einer Objektbeschaffenheit im Sinne der Erfindung kann dabei eine Information aufweisen, welche Hinweise über eine Objektbeschaffenheit in allen drei Raumdimensionen gibt.

Eine Illuminationssequenz im Sinne der Erfindung kann dabei eine konkrete Folge von Illuminationen sein. Dazu kann jeweils eine Illuminationsquelle aktiviert werden, wobei die restlichen Illuminationsquellen inaktiv sind.

Eine Illuminationsquelle im Sinne der Erfindung kann dabei eine Lichtquelle sein, um das Objekt zu beleuchten. Durch die Anordnung mehrerer solcher Illuminationsquellen um das Objekt, kann somit eine winkelselektive Beleuchtung des Objektes erreicht werden. Beispielsweise kann die Illuminationsquelle eine an einem Objektiv angeordnete Ringlichtbeleuchtung oder Einzel-LED-Beleuchtung mit mehreren Einzellichtquellen (z.B. LED's) sein, mit denen eine Beleuchtung des Objektes aus den verschiedenen Quadranten (Nord-NO-Ost-SO-Süd-SW-West-NW) in vorgegebener Reihenfolge einzeln oder kombiniert realisiert werden kann.

Ein Illuminationsbild im Sinne der Erfindung kann dabei eine Aufnahme eines Objektes innerhalb der Illuminationssequenz sein.

Ein Überlagern zweier benachbarter Illuminationsbilder im Sinne der Erfindung kann dabei ein Vorgang sein, bei welchem jeweils gleiche Bildanteile zweier Bilder verstärkt oder abgeschwächt werden. Die kann beispielsweise pixelweise erfolgen.

Ein Gesamtachsenbild im Sinne der Erfindung kann dabei ein Bild sein, welches durch Überlagern beziehungsweise Kombinieren von Illuminationsbildern entsteht. Dabei können diejenigen Illuminationsbilder herangezogen werden, welche jeweils bezüglich der gleichen Achse benachbart sind.

Ein Farbverlaufsbild im Sinne der Erfindung kann dabei ein Bild sein, welches entsteht, wenn über ein Gesamtachsenbild ein entsprechender Farbverlauf gelegt wird. Beispielsweise kann in einem kartesischen Koordinatensystem für die x-Achse ein erster Farbverlauf, wie beispielsweise ein blau-gelb Verlauf gelegt werden, und für die y-Achse ein weiterer Farbverlauf, beispielsweise ein rot-grün Verlauf gelegt werden. Das Farbverlaufsbild des x-Achsen Gesamtachsenbildes würde dann einen blau-gelb Farbverlauf aufweisen. Dieser Farbverlauf kann dann indikativ sein, für einen Höhenverlauf des Objektes in der horizontalen Achse, während dann der Farbverlauf des Farbverlaufsbildes des y-Achsen Gesamtachsenbildes indikativ sein kann, für einen Höhenverlauf des Objektes in der vertikalen Achse. Insbesondere kann ein Farbverlauf auch ein Kontrast sein. Ist der Farbverlauf ein Kontrast, so kann der Höhenverlauf der Beschaffenheit des Objektes farbcodiert darstellbar werden, indem eine Helligkeitsinformation als Farbcodierung verwendet wird, wobei die Helligkeit im Bild beziehungsweise die Helligkeit des Pixels die Höheninformation darstellt.

Ein Farbraum im Sinne der Erfindung kann dabei ein digital festgelegter Farbraum sein, wie er beispielsweise für Computerbildschirme und/oder im Print-Bereich eingesetzt wird. Durch die erfindungsgemäße Lehre wird der Vorteil erreicht, dass sowohl eine Information über die Materialbeschaffenheit als auch eine Höheninformation des Objektes in einem Bild dargestellt werden können. Ferner kann das Objekt in Originalfarben dargestellt werden und über die Helligkeit kann eine räumliche Zuordnung erreicht werden. Somit kann auf einfache und schnelle Weise eine Kombination von Einzelkontrasten in einem Einzelbild erreicht werden, um mehr Informationen über das Objekt in dem Objektbild darzustellen.

Der Gegenstand eines nebengeordneten Anspruches betrifft dabei eine kontrastbildende Vorrichtung zur Generierung eines

Kontrastbildes, vorzugsweise aus mikroskopischen Abbildungen, insbesondere zum Ablesen von Höhenverlaufsinformationen einer Objektbeschaffenheit, besonders bevorzugt zum Lichtmikroskopieren, die Kontrastbildungsvorrichtung aufweisend eine Bildaufnahmevorrichtung und eine Kontrastbildungsvorrichtung. Dabei ist die Bildaufnahmevorrichtung dazu eingerichtet, ein Bild eines Objekt aufzunehmen bzw. in bekannter Weise digital zu erfassen und ein Ergebnis der Bildaufnahme, also ein Bild an die Kontrastbildungsvorrichtung zu übermitteln. Dabei ist die Kontrastbildungsvorrichtung dazu eingerichtet, ein erfindungsgemäßes Kontrastbildungsverfahren auszuführen.

Eine Bildaufnahmevorrichtung im Sinne der Erfindung kann dabei eine Vorrichtung sein, welche geeignet ist, ein Objekt optisch zu erfassen und darzustellen. Insbesondere kann die Bildaufnahmevorrichtung ein Mikroskop sein, besonders bevorzugt ein Lichtmikroskop. Ferner kann die Bildaufnahmevorrichtung eine Mehrzahl an Illuminationsquellen zur winkelselektiven Beleuchtung des abzubildenden Objektes aufweisen.

Ein Kontrastbildungsvorrichtung im Sinne der Erfindung kann dabei eine Vorrichtung aufweisen, welche dazu eingerichtet ist, Kontraste aus Bildern, welche durch die Beleuchtung des Objektes bei der Bildaufnahme entstehen, zu erzeugen. Die Kontrastbildungsvorrichtung kann hierzu eine CPU und eine zugehörige Architektur aufweisen. Insbesondere kann die Kontrastbildungsvorrichtung in eine Bildverarbeitungseinheit des Mikroskops integriert oder ein entsprechend eingerichteter Computer sein.

Durch die erfindungsgemäße Lehre wird der Vorteil erreicht, dass kostengünstig eine Vorrichtung bereitgestellt werden kann, welche es ermöglicht, ein Objekt winkelselektiv zu beleuchten, dabei eine Mehrzahl von Bildern zu erfassen, um und eine Kombination von Einzelkontrasten der erfassten Bilder in einem Einzelbild zu erreichen, um mehr Informationen über das Objekt in dem Objektbild darzustellen.

Der Gegenstand eines weiteren nebengeordneten Anspruches betrifft dabei ein Computerprogrammprodukt für eine erfindungsgemäße kontrastbildende Vorrichtung, welche nach einem erfindungsgemäßen Kontrastbildungsverfahren betreibbar ist. Das Computerprogramm umfasst Programmcodemittel, in denen die Schritte des erfindungsgemäßen Kontrastbildungsverfahrens mittels einer Bildverarbeitung implementiert sind. Das Computerprogramm kann in einer Echtzeit-Bildverarbeitungseinheit als Hardwarecode implementiert sein, oder alternativ als reine Bildnachverarbeitung ausgeführt sein.

Bei der vorteilhaften Integration des Programmcodes für das Kontrastbildungsverfahren in die Hardware (Digitale Bildverarbeitungseinheit eines Lichtmikroskopes) kann eine sehr schnelle Bildverarbeitung erfolgen und das Ergebnis quasi als "Live"-Bild betrachtet werden, da die Aufnahme der Einzelbilder und deren Bildverarbeitung schneller erfolgt als die Wiedergabefrequenz des Live-Bildes.

Durch die erfindungsgemäße Lehre wird der Vorteil erreicht, dass damit das Kontrastbildungsverfahren automatisiert betreibbar ist und auf einfache und kostengünstige Weise, für entsprechende, verschiedene erfindungsgemäße Vorrichtungen bereitgestellt werden kann. Besonders vorteilhaft ist das Computerprogrammprodukt in die Bildverarbeitungseinheit des Mikroskopes integriert bzw. integrierbar. Es kann auch als Hardwarecode in die Bildverarbeitungshardware integriert sein.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass damit das Kontrastbildungsverfahren automatisiert betreibbar ist und auf einfache und kostengünstige Weise, für entsprechende, verschiedene erfindungsgemäße Vorrichtungen bereitgestellt werden kann und dabei einfach transportiert werden kann, um das Verfahren direkt auf die entsprechende erfindungsgemäße Vorrichtung, am Ort der Vorrichtung portieren zu können.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist in dem Kontrastbildungsverfahren das Überlagern jeweils zweier bezüglich der ersten Achse benachbarter Illuminationsbilder zu dem ersten Gesamtachsenbild der ersten Achse, und das Überlagern jeweils zweier bezüglich der zweiten Achse benachbarter Illuminationsbilder zu dem zweiten Gesamtachsenbild der zweiten Achse, jeweils entsprechend auf: Verrechnen jeweils zweier bezüglich der entsprechenden ersten Achse beziehungsweise zweiten Achse benachbarter Illuminationsbilder zu entsprechenden Zwischenbildern bezüglich der entsprechenden ersten Achse beziehungsweise zweiten Achse. Verrechnen der entsprechenden Zwischenbilder zu dem entsprechenden ersten Gesamtachsenbild beziehungsweise dem zweiten Gesamtachsenbild. Dabei weist das jeweilige Verrechnen jeweils eine Addition oder eine Subtraktion auf. Dabei kann aber auch zusätzlich eine Skalierung, Bildfilterung oder eine andersartige Bildbearbeitung an den Einzelbildern ausgeführt werden - vor und/oder nach der Addition bzw. Subtraktion. Diese Ausgestaltung weist den Vorteil auf, dass damit ein Verfahrensteil wiederholt angewendet werden kann, um das entsprechende Gesamtachsenbild zu erhalten. Dadurch kann das Verfahren vereinfacht werden.

Entsprechend einer weiteren exemplarischen Ausgestaltung weist das Kontrastbildungsverfahren ferner auf, dass das Überlagern der entsprechenden Illuminationsbilder zu dem ersten Gesamtachsenbild der ersten Achse beziehungsweise zu dem zweiten Gesamtachsenbild der zweiten Achse, jeweils eine entsprechende Graubildtransformation aufweist.

Diese Ausgestaltung weist den Vorteil auf, dass damit das Gesamtachsenbild transformiert werden kann, derart, dass nicht benötigte Farbinformationen weggelassen werden, um das Gesamtachsenbild auf einfache Weise für andere Informationen verwenden zu können.

Entsprechend einer weiteren exemplarischen Ausgestaltung weist in dem Kontrastbildungsverfahren das Transformieren des ersten Farbverlaufsbildes und des zweiten Farbverlaufsbildes in den Farbraum auf: Zuweisen des ersten Farbverlaufsbildes zu einem ersten bildgebenden Kanal des Farbraumes. Und zuweisen des zweiten Farbverlaufsbildes zu einem zweiten bildgebenden Kanal des Farbraumes.

Ein bildgebender Kanal des Farbraumes im Sinne der Erfindung kann dabei ein Kanal des Farbraumes sein, welcher zur visuellen Darstellung genutzt wird. Der RGB-Farbraum beispielsweise weist drei bildgebende Kanäle auf, den R-Kanal, den G-Kanal und den B-Kanal, auf welchem unterschiedliche Farben kodiert sind.

Diese Ausgestaltung weist den Vorteil auf, dass die bildgebenden Kanäle des Farbraumes selbst zur

Informationsführung über die Objektbeschaffenheit genutzt werden können.

Entsprechend einer weiteren exemplarischen Ausgestaltung weist in dem Kontrastbildungsverfahren das Transformieren des ersten Farbverlaufsbildes und des zweiten Farbverlaufsbildes in den Farbraum ein Zuweisen einer Helligkeitsinformation zu einem dritten bildgebenden Kanal des Farbraumes auf.

Diese Ausgestaltung weist den Vorteil auf, dass mittels der Helligkeitsinformation das Bild normiert werden kann oder auch dazu benutzt werden kann, eine weitere Information über die Objektbeschaffenheit im Farbraum darzustellen.

Entsprechend einer weiteren exemplarischen Ausgestaltung weist in dem Kontrastbildungsverfahren das Transformieren des ersten Farbverlaufsbildes und des zweiten Farbverlaufsbildes in den Farbraum ein Zuweisen eines Grauwertbildes zu einem dritten bildgebenden Kanal des Farbraumes auf.

Ein Grauwertbild im Sinne der Erfindung kann dabei eine Schwarz-weiß Verlaufsinformation des Bildes sein. Das Grauwertbild kann auch einen Kontrast aufweisen.

Diese Ausgestaltung weist den Vorteil auf, dass mittels des Grauwertbildes das Bild normiert werden kann oder auch dazu benutzt werden kann, eine weitere Information über die Objektbeschaffenheit im Farbraum darzustellen.

Entsprechend einer weiteren exemplarischen Ausgestaltung weist das Kontrastbildungsverfahren ferner auf, dass zwei Richtungsinformationen der vier Richtungsinformationen indikativ für jeweils eine Richtung entlang der ersten Achse sind. Und ferner weist das Kontrastbildungsverfahren auf, dass zwei weitere Richtungsinformationen der vier Richtungsinformationen indikativ für jeweils eine Richtung entlang der zweiten Achse sind.

Diese Ausgestaltung weist den Vorteil auf, dass eine Höhenverlaufsinformationen der Objektbeschaffenheit auf einfache Weist im Farbraum darstellbar wird, indem die Richtungen der Achsen, welche für die Generierung des Gesamtachsenbildes genutzt werden, auch für die Höhenverlaufsinformationen genutzt werden.

Entsprechend einer weiteren exemplarischen Ausgestaltung weist das Kontrastbildungsverfahren ferner auf, dass der Farbraum ein CIELAB Farbraum, ein additiver Farbraum, ein subtraktiver Farbraum oder ein Hue-Saturation Farbraum ist.

Ein CIELAB Farbraum im Sinne der Erfindung kann dabei alle wahrnehmbaren Farben beschreiben. Zu den wichtigsten Eigenschaften des CIELAB-Farbmodells zählen die Geräteunabhängigkeit und die Wahrnehmungsbezogenheit. Das bedeutet, dass Farben unabhängig von der Art ihrer Erzeugung oder Wiedergabetechnik so definiert werden, wie sie von einem Normalbeobachter bei einer Standard-Lichtbedingung wahrgenommen werden. Das Farbmodell ist in der EN ISO 11664-4 definiert.

Ein additiver Farbraum im Sinne der Erfindung kann dabei bedeuten, dass die Änderung des vom Auge empfundenen Farbeindrucks durch sukzessives Hinzufügen eines jeweils anderen Farbreizes erfolgt. Grundsätzlich ist das Farbsehen mit Hilfe unterschiedlich farbempfindlicher Sensoren im Auge eine additive Mischung. Da die additive Farbmischung in Auge und Gehirn stattfindet, wird sie auch physiologische Farbmischung genannt. Ein additiver Farbraum kann beispielsweise der RGB-Farbraum sein.

Ein subtraktiver Farbraum im Sinne der Erfindung kann dabei die Änderung eines Farbreizes bei Reflexion von der Oberfläche eines Körpers durch Remission oder beim Durchgang durch ein Medium (Farbfilter) durch Transmission bezeichnen. Im engeren Sinne versteht man unter subtraktiver Farbmischung jenes extreme Prinzip, bei dem durch Hintereinanderschalten von drei Farbfiltern die Vielfalt des Farbenraums reproduziert wird. Beispielsweise können der CMY-Farbraum oder der CMYK-Farbraum ein subtraktiver Farbraum sein.

Ein Hue-Saturation Farbraum im Sinne der Erfindung kann dabei ein Farbraum sein, bei denen man die Farbe mit Hilfe des Farbwerts (englisch hue), der Farbsättigung (saturation) und des Hellwerts (oder der Dunkelstufe) (value) definiert. Dieser wird auch HSV-Farbraum genannt. Ähnliche Definitionen führen zu einem HSL-Farbraum mit der relativen Helligkeit (lightness), einem HSB-Farbraum mit der absoluten Helligkeit (brightness) und einem HSI-Farbraum mit der Lichtintensität (intensity).

Diese Ausgestaltung weist den Vorteil auf, dass gut definierte und weit verbreitete Farbräume verwendet werden können, wodurch der Entwicklungsaufwand verringert werden kann, was zu einer Kosteneinsenkung führen kann.

Entsprechend einer weiteren exemplarischen Ausgestaltung weist das Kontrastbildungsverfahren ferner auf, dass das Generieren des Kontrastbildes in Abhängigkeit des Farbraumes erfolgt. Diese Ausgestaltung weist den Vorteil auf, dass in Abhängigkeit des Farbraumes entschieden werden kann, welche Objektinformationen wie farbcodiert dargestellt werden sollen.

Entsprechend einer weiteren exemplarischen Ausgestaltung weist das Kontrastbildungsverfahren ferner auf, dass nach Abschluss der Illuminationssequenz jede Illuminationsquelle das Objekt einmal illuminiert hat.

Dabei kann das Kontrastbildungsverfahren ferner aufweisen, dass nach Abschluss der Illuminationssequenz jede Illuminationsquelle das Objekt genau einmal illuminiert hat. Diese Ausgestaltung weist den Vorteil auf, dass das Objekt von allen verfügbaren Richtungen illuminiert wird, um die entsprechenden Objektinformationen von allen verfügbaren Illuminationsrichtungen zu erhalten.

Entsprechend einer weiteren exemplarischen Ausgestaltung weist das Kontrastbildungsverfahren ferner auf, dass in der Illuminationssequenz jede Illuminationsquelle das Objekt einzeln illuminiert.

Diese Ausgestaltung weist den Vorteil auf, dass das Objekt nur so oft belichtet werden muss, wie notwendig und dass nur die minimal benötigte Anzahl an Illuminationsbildern erstellt werden muss, um die gewünschten Objektinformationen dazustellen.

Die Erfindung erlaubt es somit, ein Verfahren und zugehörige Vorrichtungen bereitzustellen, wodurch es ermöglicht wird, mittels winkelselektiver Beleuchtung, verschiedene Eigenschaften eines entsprechenden Objektes darzustellen.

Dies kann beispielsweise erfolgen mittels:
- DPC - Differenz von Bildern gegenüberliegender Beleuchtungsrichtungen → Phasengradienten (BIO) bzw. Höhenprofilgradienten (MAT)
- SEC - Sum-Enhanced-Contrast: Summe aller Einzelbilder + Betrag (DPCx - Differenz gegenüberliegender Bilder in x-Richtung) + Betrag(DPCy - Differenz gegenüberliegender Bilder in y-Richtung) → Summe der Beträge der Anstiege und PK-Bild überlagert → keine direkte Einzelinformation ablesbar, aber gleichzeitige Visualisierung verschiedener Effekte
- DEC - Difference-Enhanced-Contrast: Summe aller Einzelbilder - Betrag (DPCx) - Betrag(DPCy) → Differenz des PK-Bildes und der Beträge der Anstiege → keine direkte Einzelinformation ablesbar, aber gleichzeitige Visualisierung verschiedener Effekte
- MSC - Mean-Sum-Contrast: Summe aller Differenzen der Beträge der Einzelbilder mit ihren Mittelwerten → keine Richtungsinformation - extreme Werte werden hervorgehoben Die verwendeten Abkürzungen SEC, DEC und MSC sind dabei in dieser Anmeldung definiert und so nicht als Fachbegriffe bekannt.

Nun nutze verschiedene Kontraste und die Summe der Einzelbilder (PK), um mittels spezieller Farbraumzuordnungen mehrere Informationen gleichzeitig zu kodieren.
- HSV-Farbkontrast: Speziell die Tatsache, dass die DIC / DPC-Kontraste die Information über die Materialfarbe nicht darstellen, ist problematisch. Deshalb ist folgende Kombination möglich:
   o Nehme das PK-Bild;
   o Transformiere es von RGB in den HSV-Farbraum
   o Ersetze den V-Kanal (Value) durch ein Grauwertbild des gewünschten Einzelkontrastes (beispielsweise DICx)
   o Transformiere das Bild zu RGB zurück
   o Führe gegebenenfalls eine Helligkeitsanpassung durch
   o Das Ergebnis hat nun dieselbe Farbe wie das Original, enthält in der Helligkeit aber die Informationen des Einzelkontrasts (beispielsweise einen Anstieg in x-Richtung)
- LAB-Farbkontrast: Störend ist ebenfalls, dass man die Richtungsinformation des Phasengradienten in DIC/DPC nur in eine Richtung visualisieren kann. Folgende Transformation löst dieses Problem:
   o Nutze das PK-Bild
   o Transformiere es in den Lab-Farbraum
   o Ersetze die a- und b-Kanäle mit den gewünschten Einzelkontrasten (beispielsweise DPCx, DPCy)
   o Transformiere das Bild zurück in den RGB-Farbraum
   o Das Ergebnis hat dieselben Helligkeitswerte wie das Ursprungsbild (PK) aber die Informationen der beiden Einzelkontraste sind in a beziehungsweise b gespeichert Beispielsweise bei DPCx und DPCy werden so alle Anstiegsrichtungen dargestellt und gleichzeitig farbkodiert
- RGB-Farbkontrast:
   o Schreibe in die RGB-Farbkanäle drei verschiedene Einzelkontraste (beispielsweise PK, DPCx, DPCy)
   o Das Ergebnis kodiert farblich alle drei Kontrastinformationen Dadurch wird der Vorteil generiert, dass eine einfache und schnelle Kombination von Einzelkontrasten in einem Einzelbild ermöglicht werden kann. Ferner ist das Verfahren informationserhaltend (Farbe/Helligkeit) bei HSV und LAB.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines vorgeschlagenen Verfahrens gemäß einer weiteren beispielhaften Ausgestaltung der Erfindung;
Fig. 4 eine schematische Darstellung eines vorgeschlagenen Verfahrens gemäß einer weiteren beispielhaften Ausgestaltung der Erfindung; und
Fig. 5 eine schematische Darstellung einer vorgeschlagenen Vorrichtung gemäß einer weiteren beispielhaften Ausgestaltung der Erfindung.

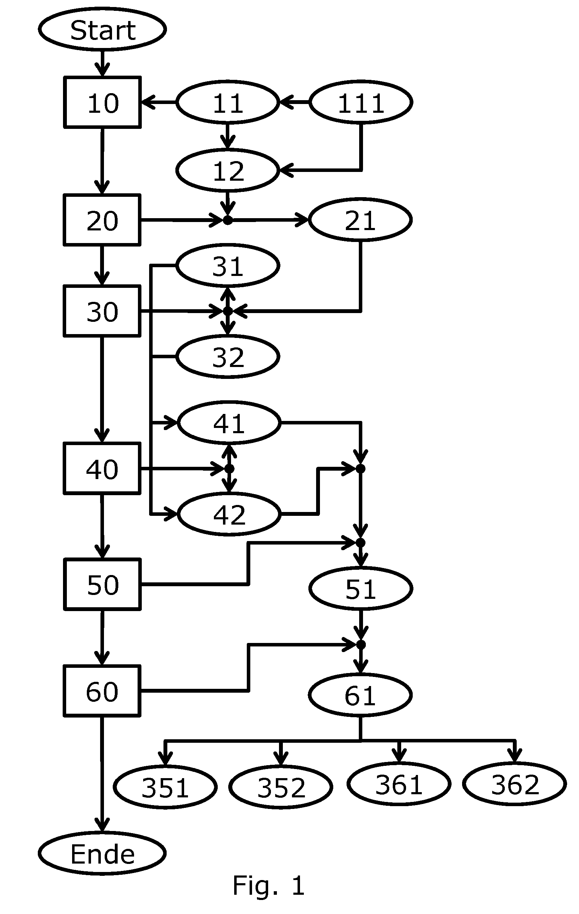

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Kontrastbildungsverfahren zum Generieren eines Kontrastbildes, vorzugsweise aus mikroskopischen Abbildungen, insbesondere zum Ablesen von Höhenverlaufsinformationen einer Objektbeschaffenheit. Dabei weist das Kontrastbildungsverfahren auf: Illuminieren 10 eines Objektes mittels einer Illuminationssequenz 11 basierend auf einer Vielzahl an Illuminationsquellen 111. Erstellen 20 eines Illuminationsbildes 21 des Objektes für eine jede Illumination 12 der Illuminationssequenz 11. Überlagern 30 jeweils zweier bezüglich einer ersten Achse 35 (in Fig. 1 nicht dargestellt) benachbarter Illuminationsbilder 21 zu einem ersten Gesamtachsenbild 31 der ersten Achse 35. Überlagern 30 jeweils zweier bezüglich einer zweiten Achse 36 (in Fig. 1 nicht dargestellt) benachbarter Illuminationsbilder 21 zu einem zweiten Gesamtachsenbild 32 der zweiten Achse 36. Erstellen 40 eines ersten Farbverlaufsbildes 41 basierend auf dem ersten Gesamtachsenbild 31. Erstellen 40 eines zweiten Farbverlaufsbildes 42 basierend auf dem zweiten Gesamtachsenbild 32. Transformieren 50 des ersten Farbverlaufsbildes 41 und des zweiten Farbverlaufsbildes 42 in einen Farbraum 51. Und generieren 60 eines Kontrastbildes 61, basierend auf dem transformierten 50 ersten Farbverlaufsbild 41 und dem zweiten Farbverlaufsbild 42 in den Farbraum 51, derart, dass vier Richtungsinformationen 351, 352, 361, 362 eines Höhenverlaufes einer Beschaffenheit des Objektes farbcodiert darstellbar sind.

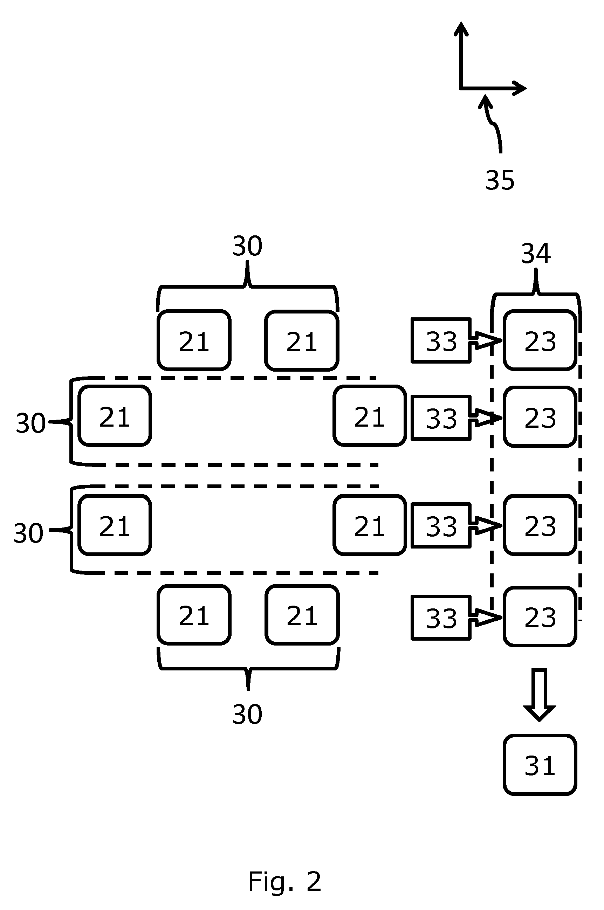

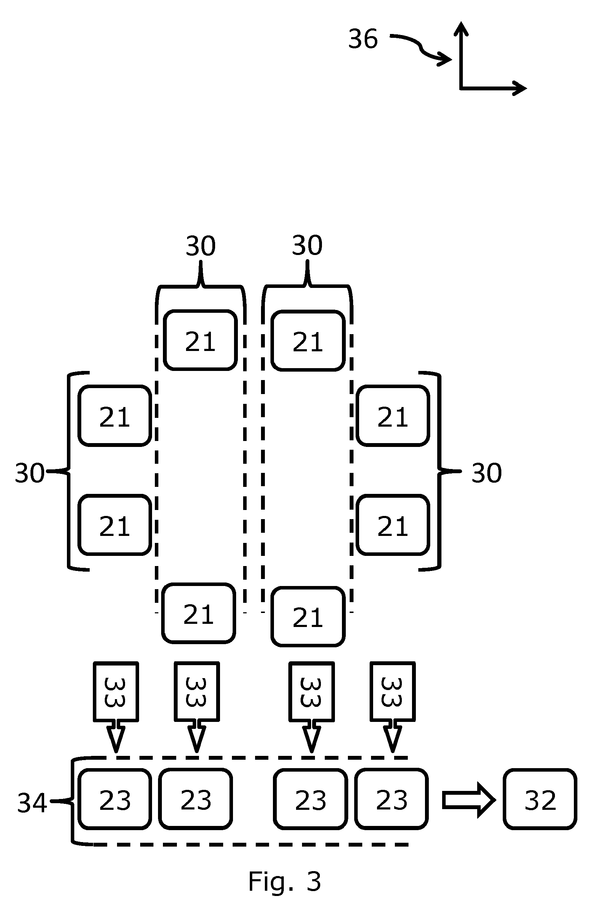

Fig. 2 und Fig. 3 zeigen jeweils eine schematische Darstellung eines Überlagerns benachbarter Illuminationsbilder zu einem Gesamtachsenbild gemäß einer weiteren beispielhaften Ausgestaltung der Erfindung.

Dabei zeigt Fig. 2 ein Überlagern 30 jeweils zweier bezüglich der ersten Achse 35 benachbarter Illuminationsbilder 21 zu dem ersten Gesamtachsenbild 31 der ersten Achse 35. Dabei erfolgt ein Verrechnen 33 jeweils zweier bezüglich der entsprechenden ersten Achse 35 benachbarter Illuminationsbilder 21 zu entsprechenden Zwischenbildern 23 bezüglich der entsprechenden ersten Achse 35. Ferner erfolgt ein Verrechnen 34 der entsprechenden Zwischenbilder 23 zu dem entsprechenden ersten Gesamtachsenbild 31.

Entsprechend zeigt Fig. 3 das Überlagern 30 jeweils zweier bezüglich der zweiten Achse 36 benachbarter

Illuminationsbilder 21 zu dem zweiten Gesamtachsenbild 32 der zweiten Achse 36. Dabei erfolgt ein Verrechnen 33 jeweils zweier bezüglich der entsprechenden zweiten Achse 36 benachbarter Illuminationsbilder 21 zu entsprechenden Zwischenbildern 23 bezüglich der entsprechenden zweiten Achse 36. Ferner erfolgt ein Verrechnen 34 der entsprechenden Zwischenbilder 23 zu dem entsprechenden zweiten Gesamtachsenbild 32.

Das jeweilige Verrechnen 33, 34 weist dabei jeweils eine Addition oder eine Subtraktion auf.

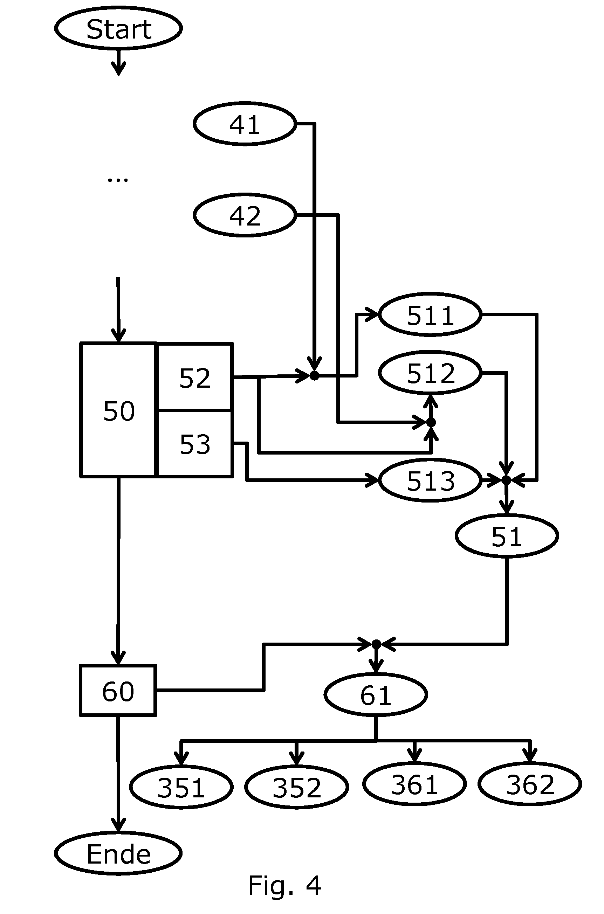

Fig. 4 zeigt eine schematische Darstellung eines vorgeschlagenen Verfahrens gemäß einer weiteren beispielhaften Ausgestaltung der Erfindung.

Dabei zeigt Fig. 4 eine schematische Darstellung eines gegenüber des Verfahrens der Fig. 1 erweiterten Verfahrens. Das zuvor zu Fig. 1 bis 3 Gesagte gilt entsprechend für Fig. 4 fort. Um die Übersichtlichkeit zu wahren, sind die dem Transformieren 50 vorhergehenden Verfahrensteile in Fig. 4 nicht dargestellt. Sie können hierzu jedoch der Fig. 1 entnommen werden.

Wie Fig. 4 entnommen werden kann, weist in dem Kontrastbildungsverfahren darüber hinaus das Transformieren 50 des ersten Farbverlaufsbildes 41 und des zweiten Farbverlaufsbildes 42 in den Farbraum 51 auf: Zuweisen 52 des ersten Farbverlaufsbildes 41 zu einem ersten bildgebenden Kanal 511 des Farbraumes 51. Und ferner zuweisen 52 des zweiten Farbverlaufsbildes 42 zu einem zweiten bildgebenden Kanal 512 des Farbraumes 51.

Darüber hinaus weist in dem Beispiel der Fig. 4 das Transformieren 50 des ersten Farbverlaufsbildes 41 und des zweiten Farbverlaufsbildes 42 in den Farbraum 51, ein Zuweisen 53 einer zusätzlichen Information, wie beispielsweise eine Helligkeitsinformation und/oder ein Grauwertbild, zu einem dritten bildgebenden Kanal 513 des Farbraumes 51 auf.

Im Beispiel der Fig. 4 sind dabei zwei Richtungsinformationen 351, 352 der vier Richtungsinformationen 351, 352, 361, 362 indikativ für jeweils eine Richtung entlang der ersten Achse 35 (in Fig. 4 nicht dargestellt), während zwei weitere Richtungsinformationen 361, 362 der vier Richtungsinformationen 351, 352, 361, 362 indikativ sind für jeweils eine Richtung entlang der zweiten Achse 36 (in Fig. 4 nicht dargestellt).

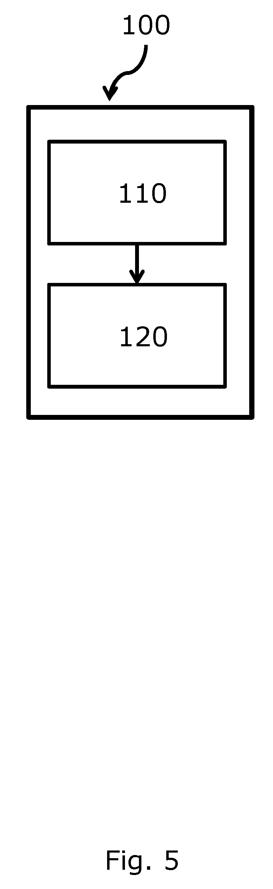

Fig. 5 zeigt eine schematische Darstellung einer vorgeschlagenen Vorrichtung gemäß einer weiteren beispielhaften Ausgestaltung der Erfindung.

Dabei zeigt Fig. 5 eine schematische Darstellung einer kontrastbildenden Vorrichtung 100 zur Generierung eines Kontrastbildes, vorzugsweise aus mikroskopischen Abbildungen, insbesondere zum Ablesen von Höhenverlaufsinformationen einer Objektbeschaffenheit, besonders bevorzugt zum Lichtmikroskopieren. Die kontrastbildende Vorrichtung 100 weist dabei auf: Eine Bildaufnahmevorrichtung 110 und eine Kontrastbildungsvorrichtung 120. Die Bildaufnahmevorrichtung 110 ist dazu eingerichtet, ein Abbild des Objektes zu optisch zu erfassen und an die Kontrastbildungsvorrichtung 120 zu übermitteln. Dabei ist die kontrastbildende Vorrichtung 100 dazu eingerichtet, ein erfindungsgemäßes Kontrastbildungsverfahren auszuführen.

### Bezugszeichenliste

10 Illuminieren des Objektes
11 Illuminationssequenz
12 Illumination der Illuminationssequenz
20 Erstellen eines Illuminationsbildes
21 Illuminationsbild
23 Zwischenbild bezüglich der ersten Achse
24 Zwischenbild bezüglich der zweiten Achse
30 überlagern von zwei Illuminationsbildern
31 erstes Gesamtachsenbild
32 zweites Gesamtachsenbild
33 verrechnen von zwei Illuminationsbildern zu einem Zwischenbild
34 verrechnen von Zwischenbildern zu einem Gesamtachsenbild
35 erste Achse
36 zweite Achse
40 Erstellen eines Farbverlaufsbildes
41 erstes Farbverlaufsbild
42 zweites Farbverlaufsbild
50 Transformieren der Farbverlaufsbilder in einen Farbraum
51 Farbraum
52 Zuweisen eines Farbverlaufsbildes zu einem bildgebenden Kanal des Farbraumes
53 Zuweisen einer weiteren Information zu dem dritten bildgebenden Kanal des Farbraumes
60 Generieren eines Kontrastbildes
61 Kontrastbild
100 kontrastbildende Vorrichtung
110 Bildaufnahmevorrichtung
111 Illuminationsquelle
120 Kontrastbildungsvorrichtung
351 erste Richtungsinformation des Höhenverlaufes
352 zweite Richtungsinformation des Höhenverlaufes
361 dritte Richtungsinformation des Höhenverlaufes
362 vierte Richtungsinformation des Höhenverlaufes
511 erster bildgebender Kanal des Farbraumes
512 zweiter bildgebender Kanal des Farbraumes
513 dritter bildgebender Kanal des Farbraumes

## Patentansprüche

1. Kontrastbildungsverfahren zum Generieren eines Kontrastbildes, vorzugsweise aus mikroskopischen Abbildungen, insbesondere zum Ablesen von Höhenverlaufsinformationen einer Objektbeschaffenheit aus dem Kontrastbild, folgende Schritte umfassend:
- Illuminieren (10) eines Objektes mittels einer Illuminationssequenz (11) basierend auf einer oder mehreren an Illuminationsquellen (111);
- Erstellen (20) eines Illuminationsbildes (21) des Objektes für eine jede Illumination (12) der Illuminationssequenz (11);
- Überlagern (30) jeweils zweier bezüglich einer ersten Achse (35) benachbarter Illuminationsbilder (21) zu einem ersten Gesamtachsenbild (31) der ersten Achse (35);
- Überlagern (30) jeweils zweier bezüglich einer zweiten Achse (36) benachbarter Illuminationsbilder (21) zu einem zweiten Gesamtachsenbild (32) der zweiten Achse (36);
- Erstellen (40) eines ersten Farbverlaufsbildes (41) basierend auf dem ersten Gesamtachsenbild (31);
- Erstellen (40) eines zweiten Farbverlaufsbildes (42) basierend auf dem zweiten Gesamtachsenbild (32),
- Transformieren (50) des ersten Farbverlaufbildes (41) und des zweiten Farbverlaufbildes (42) in einen Farbraum (51); und
- Generieren (60) eines Kontrastbildes (61), basierend auf dem transformierten (50) ersten Farbverlaufsbild (41) und dem zweiten Farbverlaufsbild (42) in den Farbraum (51), derart, dass vier Richtungsinformationen (351, 352, 361, 362) eines Höhen- oder Phasenverlaufes einer Beschaffenheit des Objektes farbcodiert darstellbar sind.

2. Kontrastbildungsverfahren gemäß Anspruch 1, wobei das Überlagern (30) jeweils zweier bezüglich der ersten Achse (35) benachbarter Illuminationsbilder (21) zu dem ersten Gesamtachsenbild (31) der ersten Achse (35), und das Überlagern (30) jeweils zweier bezüglich der zweiten Achse (36) benachbarter Illuminationsbilder (21) zu dem zweiten Gesamtachsenbild (32) der zweiten Achse (36) jeweils entsprechend aufweist:
- Verrechnen (33) jeweils zweier bezüglich der entsprechenden ersten Achse (35) beziehungsweise zweiten Achse (36) benachbarter Illuminationsbilder (21) zu entsprechenden Zwischenbildern (23, 24) bezüglich der entsprechenden ersten Achse (35) beziehungsweise zweiten Achse (36),
- Verrechnen (34) der entsprechenden Zwischenbilder (23, 24) zu dem entsprechenden ersten Gesamtachsenbild (31) beziehungsweise dem zweiten Gesamtachsenbild (32), und
wobei das jeweilige Verrechnen (33, 34) durch Addition oder Subtraktion erfolgt.

3. Kontrastbildungsverfahren gemäß Anspruch 1 oder 2, wobei das Überlagern (30) der entsprechenden Illuminationsbilder (21) zu dem ersten Gesamtachsenbild (31) der ersten Achse (35) beziehungsweise zu dem zweiten Gesamtachsenbild (32) der zweiten Achse (36) jeweils eine entsprechende Graubildtransformation aufweist.

4. Kontrastbildungsverfahren gemäß irgendeinem der vorhergehenden Ansprüche, wobei das Transformieren (50) des ersten Farbverlaufbildes (41) und des zweiten Farbverlaufbildes (42) in den Farbraum (51) aufweist:
- Zuweisen (52) des ersten Farbverlaufbildes (41) zu einem ersten bildgebenden Kanal (511) des Farbraumes (51), und
- Zuweisen (52) des zweiten Farbverlaufbildes (42) zu einem zweiten bildgebenden Kanal (512) des Farbraumes (51).

5. Kontrastbildungsverfahren gemäß irgendeinem der vorhergehenden Ansprüche, wobei das Transformieren (50) des ersten Farbverlaufsbildes (41) und des zweiten Farbverlaufsbildes (42) in den Farbraum (51) aufweist:
- Zuweisen (53) einer Helligkeitsinformation zu einem dritten bildgebenden Kanal (513) des Farbraumes (51).

6. Kontrastbildungsverfahren gemäß irgendeinem der Ansprüche 1 bis 4, wobei das Transformieren (50) des ersten Farbverlaufbildes (41) und des zweiten Farbverlaufbildes (42) in den Farbraum (51) aufweist:
- Zuweisen (53) eines Grauwertbildes zu einem dritten bildgebenden Kanal (513) des Farbraumes (51).

7. Kontrastbildungsverfahren gemäß irgendeinem der vorhergehenden Ansprüche, wobei zwei Richtungsinformationen (351, 352) der vier Richtungsinformationen (351, 352, 361, 362) indikativ sind für jeweils eine Richtung entlang der ersten Achse (35), und zwei weitere Richtungsinformationen (361, 362) der vier Richtungsinformationen (351, 352, 361, 362) indikativ sind für jeweils eine Richtung entlang der zweiten Achse (36).

8. Kontrastbildungsverfahren gemäß irgendeinem der vorhergehenden Ansprüche, wobei der Farbraum (51) ein CIELAB Farbraum, ein additiver Farbraum, ein subtraktiver Farbraum oder ein Hue-Saturation Farbraum ist.

9. Kontrastbildungsverfahren gemäß irgendeinem der vorhergehenden Ansprüche, wobei das Generieren (60) des Kontrastbildes (61) in Abhängigkeit des Farbraumes (51) erfolgt.

10. Kontrastbildungsverfahren gemäß irgendeinem der vorhergehenden Ansprüche, wobei nach Abschluss der Illuminationssequenz (11) jede Illuminationsquelle (111) das Objekt einmal illuminiert hat.

11. Kontrastbildungsverfahren gemäß irgendeinem der vorhergehenden Ansprüche, wobei in der Illuminationssequenz (11) jede Illuminationsquelle (111) das Objekt einzeln illuminiert.

12. Kontrastbildende Vorrichtung (100) zur Generierung eines Kontrastbildes, vorzugsweise aus mikroskopischen Abbildungen, insbesondere zum Ablesen von Höhenverlaufsinformationen einer Objektbeschaffenheit, besonders bevorzugt zum Lichtmikroskopieren, die kontrastbildende Vorrichtung (100) aufweisend:
- Eine Bildaufnahmevorrichtung (110), und
- eine Kontrastbildungsvorrichtung (120), wobei die Bildaufnahmevorrichtung (110) dazu eingerichtet ist, ein Bild eines Objekt zu erfassen und ein Ergebnis der Erfassung an die Kontrastbildungsvorrichtung (120) zu übermitteln, und
wobei die kontrastbildende Vorrichtung (100) dazu eingerichtet ist, ein Kontrastbildungsverfahren gemäß irgendeinem der vorhergehenden Ansprüche auszuführen.

13. Computerprogrammprodukt mit Programmcodemitteln für eine kontrastbildende Vorrichtung (100) gemäß Anspruch 12, wobei die Programmcodemittel ein Kontrastbildungsverfahren gemäß irgendeinem der Ansprüche 1 bis 11 beinhalten.

14. Datenträger aufweisend ein
Computerprogrammprodukt gemäß Anspruch 13.
